# EUROPÄISCHE PATENTSCHRIFT

(11) **EP 2 597 440 B1**
(45) Veröffentlichungstag und Bekanntmachung des Hinweises auf die Patenterteilung: **27.12.2017**
(21) Anmeldenummer: 12194437.5
(22) Anmeldetag: 27.11.2012
(51) Int. Cl.: G01K 1/02, G01K 7/00

(54) **Passiver Temperatursensor**
Passive temperature sensor
Capteur de température passif

(30) Priorität: 28.11.2011 DE 102011087262
(43) Veröffentlichungstag der Anmeldung: 29.05.2013
(73) Patentinhaber: Fraunhofer-Gesellschaft zur Förderung der angewandten Forschung e.V., 80686 München (DE)
(72) Erfinder: Dräger, Tobias, 91083 Baiersdorf (DE); Bernhard, Josef, 92507 Nabburg (DE)
(74) Vertreter: Hersina, Günter

(56) Entgegenhaltungen:
- US-A- 3 971 362
- US-A- 4 075 632
- US-A1- 2005 070 811

## Beschreibung

Ausführungsbeispiele der vorliegenden Erfindung beziehen sich auf einen passiven Temperatursensor mit leitungsungebundener Messsignalübertragung und auf eine Lesevorrichtung zur passiven Temperaturmessung. Insbesondere beziehen sich Ausführungsbeispiele auf einen passiven Temperatursensor mit leitungsungebundener Messsignalübertragung mittels Lastmodulation bei induktiver Kopplung.

Temperatursensoren dienen dem Zweck, ein maschinenverarbeitbares Messsignal auf Basis der gemessenen Umgebungstemperaturen auszugeben. Dieses Messsignal kann beispielsweise ein digitales oder analoges Signal sein. Temperatursensoren werden in unterschiedlichen technischen Anwendungsgebieten, wie z.B. im Automobilbau, eingesetzt. Hierbei werden je nach Anwendungsgebiet unterschiedliche Anforderungen hinsichtlich Temperaturmessbereich und Umgebungsbedingungen an die Temperatursensoren gestellt.

Die US-Patentanmeldungen US 2005/0070811 A1 und US 4,075,632 offenbaren beide passive Temperaturmessschaltungen, die ausgehend von einem Signal eines Temperatursensors ein Wechselsignal unter Zuhilfenahme des Oszillators ausgeben.

Die Aufgabe der vorliegenden Erfindung ist es, einen auch bei widrigen Umgebungsbedingungen, flexibel einsetzbaren und sicher auslesbaren Temperatursensor zu schaffen.

Die Aufgabe der vorliegenden Erfindung wird durch einen passiven Temperatursensor gemäß Anspruch 1 und eine Lesevorrichtung zur passiven Temperaturmessung gemäß Anspruch 11 gelöst.

Kern der vorliegenden Erfindung ist es, einen passiven, drahtlos auslesbaren Temperatursensor zu implementieren, d.h. einen Temperatursensor der leitungsungebunden mit Energie versorgbar ist und bei dem ferner das Temperatur-Messsignal bei ausreichender externer Energieversorgung drahtlos (leitungsungebunden) auslesbar ist. Der passive Temperatursensor wird über ein magnetisches oder elektromagnetisches Sendewechselfeld, d.h. von außen, aktiviert und mit Energie versorgt. Hierbei erfolgt die Ankopplung des passiven Temperatursensors an das Sendewechselfeld mittels eines Koppelelements, z.B. einer Sendespule oder einer Antenne, welches eine definierte physikalische Eigenschaft, wie z.B. eine Impedanz oder einen Lastwiderstand, aufweist. Die Messung der Umgebungstemperatur erfolgt mittels einer Temperaturmessschaltung des Temperatursensors, welche bei Aktivierung, d.h. bei ausreichender Energieversorgung, ein temperaturabhängiges Sensorwechselsignal als Ausgangssignal erzeugt. Die Temperaturmessschaltung ist dazu ausgebildet, um das temperaturabhängige Sensorwechselsignal so zu erzeugen, dass ein vorgegebener oder bekannter Zusammenhang zwischen der Frequenz des Sensorwechselsignals und der zu messenden Umgebungstemperatur vorliegt. Dieses Sensorwechselsignal wird nun eingesetzt, um die physikalische Eigenschaft des Koppelelements gezielt zu verändern. Diese Änderung ist beispielsweise anhand einer Lastmodulation oder modulierten Rückstreuung des Sendewechselfelds von außen detektierbar, wodurch über die erfasste Frequenz des Sensorwechselsignals ein Rückschluss auf die durch den Temperatursensor gemessene Umgebungstemperatur ermöglicht wird. Die Detektion erfolgt mittels einer Lesevorrichtung, die auf Basis der Beeinflussung des Sendewechselfelds durch den passiven Temperatursensor die gemessene Umgebungstemperatur ermittelt. Gleichzeitig versorgt diese Lesevorrichtung den passiven Temperatursensor drahtlos mit Energie, z.B. über das induktiv angekoppelte Sendewechselfeld, das von der Lesevorrichtung erzeugt wird.

Die Temperaturmessung der Temperaturmessschaltung basiert entsprechend Ausführungsbeispielen darauf, dass ein Schaltverhalten der Temperaturmessschaltung bzw. ein Schaltverhalten von Transistoren oder Feldeffekttransistoren der Temperaturmessschaltung in Abhängigkeit von der Umgebungstemperatur variiert. Die Transistoren oder Feldeffekttransistoren der Temperaturmessschaltung können beispielsweise so verschaltet sein, dass sie das Sensorwechselsignal, z.B. ein Rechtecksignal, Sinussignal, Pulssignal oder anderes periodisches Signal, aus dessen Verlauf eine Temperatur ableitbar ist, erzeugen. Bei einer Änderung der Umgebungstemperatur ändert sich das Schaltverhalten der Feldeffekttransistoren so, dass sich die Frequenz des erzeugten Sensorwechselsignals in Abhängigkeit von der Änderung der Umgebungstemperatur ändert.

Ausführungsbeispiele der vorliegenden Erfindung schaffen einen passiven Temperatursensor mit leitungsungebundener Messsignalübertragung. Dieser umfasst ein Koppelelement, das ausgebildet ist, um einem magnetischen oder elektromagnetischen Sendewechselfeld elektrische Energie zu entnehmen. Ferner weist dieser ein Energieaufbereitungselement auf, das ausgebildet ist, um basierend auf der entnommenen elektrischen Energie ein Energieversorgungssignal, wie z.B. eine Spannung bzw. Stromstärke, bereitzustellen. Der passive Temperatursensor umfasst ferner eine Temperaturmessschaltung, z.B. eine Multivibratorschaltung, die ausgebildet ist, um bei ausreichender Versorgung mit dem Energieversorgungssignal ein Sendewechselsignal, dessen Frequenz abhängig von einer Umgebungstemperatur ist, zu erzeugen. Ein Schaltelement des passiven Temperatursensors ist ausgebildet, um basierend auf dem Sensorwechselsignal eine dem Koppelelement zugeordnete physikalische Eigenschaft, wie z.B. einen Lastwiderstandswert oder Impedanzwert, zu verändern, um basierend auf dem Sensorwechselsignal eine Beeinflussung des Sendewechselfelds zu erhalten, die von außen zur Temperaturinformation detektierbar ist. Hierbei ist es vorteilhaft, dass derartige passive Temperatursensoren auch bei hohen Temperaturen, z.B. > 150° C einsetzbar sind. Auch eine Einbettung desselben in dünne Schichten, die ggf. auch leitfähig bzw. schwach leitfähig (z.B. Kohlefaserverbundwerkstoffe) sein können, ist hierbei möglich. Des Weiteren ist es vorteilhaft, dass eine solche Temperaturmessschaltung eine niedrige Energieaufnahme aufweist, so dass kein separater Energiespeicher benötigt wird, sondern die Energieversorgung beispielsweise auf Basis eines magnetischen oder elektromagnetischen Sendewechselfelds, das durch eine Lesevorrichtung zur passiven Temperaturmessung bereitgestellt wird, erfolgt. Durch die Energieversorgung des passiven Temperatursensors aus dem Sendewechselfeld und dem Verzicht auf einen Energiespeicher kann der passive Temperatursensor auch bei hohen Temperaturen, z.B. bis zu 150° C oder 300° C bzw. bevorzugt in einem Bereich zwischen - 40° C und 200° C, eingesetzt werden, bei denen herkömmliche Energiespeicher, wie z.B. eine Batterie oder Akku, nicht verwendbar sind.

Entsprechend Ausführungsbeispielen erfolgt die Informationsübertragung bezüglich der Umgebungstemperatur durch Aufmodulieren des Senderwechselsignals mittels des Koppelelements auf das Sendewechselfeld. Hierbei ist das Schaltelement des passiven Temperatursensors, der im Nahfeld (z.B. in einem Abstand von 1 mm bis 1 m) von einem magnetischen Sendewechselfeld mittels induktiver Kopplung mit Energie versorgt wird, dazu ausgebildet, um basierend auf dem Sensorwechselsignal durch eine Veränderung des Lastwiderstands eine Lastmodulation des magnetischen Sendewechselfelds durchzuführen. Hierbei ist es vorteilhaft, dass das Sensorwechselsignal direkt, d. h. ohne Nachbearbeitung, z.B. mittels Digitalisierung, auf das Sendewechselfeld aufmoduliert werden kann, was die Komplexität und Störanfälligkeit des passiven Temperatursensors reduziert.

Entsprechend weiteren Ausführungsbeispielen kann das Schaltelement des passiven Temperatursensors, welcher im Fernfeld (d. h. mit einem Abstand > 1 m oder in einem Bereich von 1 bis 3m) eines elektromagnetischen Sendewechselfelds mit Energie versorgt wird, dazu ausgebildet sein, um basierend auf dem Sensorwechselsignal durch Veränderung des Impedanzwerts eine modulierte Rückstreuung des elektromagnetischen Sendewechselfelds durchzuführen und so die Temperaturinformation der Lesevorrichtung bereitzustellen. Bei solchen Temperatursensoren, die die modulierte Rückstreuung zur Temperaturinformationsübertragung nutzen, bestehen ebenfalls die Vorteile, dass die Schaltungskomplexität und damit die Anfälligkeit sehr gering sind. Dieser Betriebsmodus ermöglicht des Weiteren, dass der passive Temperatursensor auch im Fernfeld des Lesegeräts betreibbar ist. Aufgrund der geringeren Energiedichte des elektromagnetischen Sendewechselfelds im Fernfeld kann der passive Temperatursensor beispielsweise als integrierter Schaltkreis ausgeführt sein, der sich durch einen sehr geringen Energiebedarf auszeichnet.

Entsprechend einem weiteren Ausführungsbeispiel schafft die Erfindung eine Lesevorrichtung zur passiven Temperaturmessung. Diese Lesevorrichtung umfasst ein Lesekoppelelement, das ausgebildet ist, um ein magnetisches oder elektromagnetisches Sendewechselfeld bereitzustellen, und um eine durch einen passiven Temperatursensor erfolgte Beeinflussung des Sendewechselfelds, wie z.B. eine Lastmodulation oder modulierte Rückstreuung zu erfassen. Des Weiteren umfasst die Lesevorrichtung eine Auswerteeinrichtung, die ausgebildet ist, um eine Temperaturinformation über die Umgebungstemperatur des passiven Temperatursensors auf Basis der erfolgten Beeinflussung des Sendewechselfelds zu berechnen. Hierbei kann beispielsweise eine Look-up-Table zum Einsatz kommen, die Informationen über eine Zuordnung zwischen der Frequenz des Sensorwechselsignals, welches auf das Sendewechselfeld aufmoduliert ist, und der gemessenen Umgebungstemperatur beinhaltet. Hierbei ist es vorteilhaft, dass die Lesevorrichtung einerseits die Energie für den passiven Temperatursensor zur Verfügung stellt, als auch andererseits die Beeinflussung des Sendewechselfelds als Temperaturinformation erfasst. Die Erfassung und Auswertung zeichnen sich durch eine geringe Komplexität aus, da keine aufwendige Nachbearbeitung, z.B. durch Decodierung, notwendig ist.

Ausführungsbeispiele der vorliegenden Erfindung werden Bezug nehmend auf die beiliegenden Zeichnungen näher erläutert. Es zeigen:
- Fig. 1: eine schematische Darstellung eines passiven Temperatursensors mit leitungsungebundener Messsignalübertragung gemäß einem Ausführungsbeispiel;
- Fig. 2a: eine schematische Darstellung einer induktiven Kopplung im Nahfeld zwischen einem passiven Temperatursensor und einer Lesevorrichtung gemäß einem Ausführungsbeispiel;
- Fig. 2b: eine schematische Darstellung einer elektromagnetische Kopplung im Fernfeld zwischen einem passiven Temperatursensor und einer Lesevorrichtung gemäß einem Ausführungsbeispiel;
- Fig. 3: ein schematisches Schaltbild einer Temperaturmessschaltung gemäß einem Ausführungsbeispiel; und
- Fig. 4: ein schematisches Schaltbild eines passiven Temperatursensors mit leitungsungebundener Messsignalübertragung gemäß einem Ausführungsbeispiel.

Bevor nachfolgend Ausführungsbeispiele der vorliegenden Erfindung im Detail anhand von Zeichnungen näher erläutert werden, wird darauf hingewiesen, dass identische, funktionsgleiche oder gleichwirkende Elemente in den unterschiedlichen Figuren mit den gleichen Bezugszeichen versehen sind, so dass die bei den unterschiedlichen Ausführungsbeispielen dargestellte Beschreibung der mit gleichen Bezugszeichen versehenen Elemente und Strukturen untereinander austauschbar ist bzw. aufeinander angewendet werden kann.

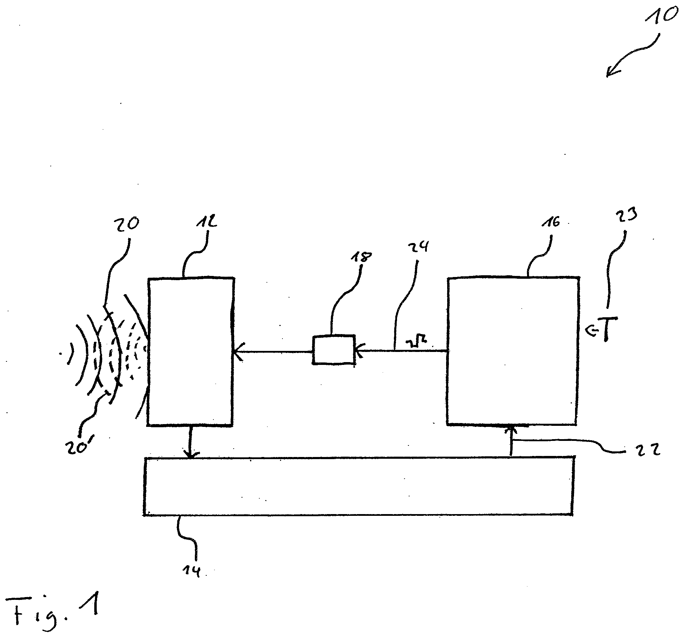

Fig. 1 zeigt einen passiven Temperatursensor 10 mit leitungsungebundener Messsignalübertragung. Der passive Temperatursensor 10 weist ein Koppelelement 12, ein Energieaufbereitungselement 14, eine Temperaturmessschaltung 16 und ein Schaltelement 18 auf.

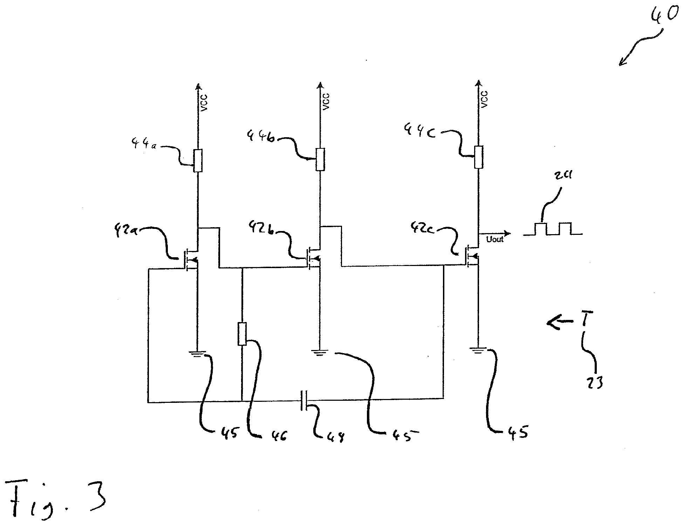

Das Koppelelement 12 ist ausgebildet, um einem magnetischen oder elektromagnetischen Sendewechselfeld 20 Energie zu entnehmen. Diese elektrische Energie wird mittels des Energieaufbereitungselements 14 zur Energieversorgung der Temperaturmessschaltung 16 als Energieversorgungssignal 22 bereitgestellt. Die Temperaturmessschaltung 16 weist beispielsweise eine Multivibratorschaltung, eine Kippschaltung oder eine Oszillatorschaltung auf, welche ein von einer Umgebungstemperatur 23 abhängiges Schaltverhalten hat, auf Basis dessen die Ermittlung der Umgebungstemperatur 23 erfolgt. Das temperaturabhängige Schaltverhalten kann beispielsweise durch ein oder mehrere Transistoren oder Feldeffekttransistoren der Temperaturmessschaltung 16 ausgebildet werden, bei denen jeweils die Gate-Source-Spannung zur Durchschaltung des Kanals in Abhängigkeit von der Umgebungstemperatur 23 variiert, wie in Fig. 3 im Detail erläutert werden wird. Infolgedessen, gibt die Temperaturmessschaltung 16 bei ausreichender Energieversorgung ein Sensorwechselsignal 24, wie z.B. ein Rechtecksignal, Sinussignal, Sägezahnsignal oder Impulssignal, aus, dessen Frequenz abhängig von der Umgebungstemperatur 23 ist. Dies wird beispielsweise dadurch realisiert, dass die Temperaturmessschaltung 16 zwei astabile Zustände aufweist, die beispielsweise bei zunehmender Umgebungstemperatur 23 mit einer umso höheren Frequenz hin- und herwechseln. Somit erfolgt eine temperaturabhängige Beeinflussung der Frequenz des Sensorwechselsignals 24 bzw. des Rechtecksignals. Auf Basis dieses Sensorwechselsignals 24 wird durch das Schaltelement 18 eine physikalische Eigenschaft, wie z.B. ein Lastwiderstandswert oder ein Impedanzwert, des Koppelelements 12 verändert, um basierend auf dem Sensorwechselsignal 24 eine Beeinflussung 20' des Sensorwechselfelds 20 zu erhalten.

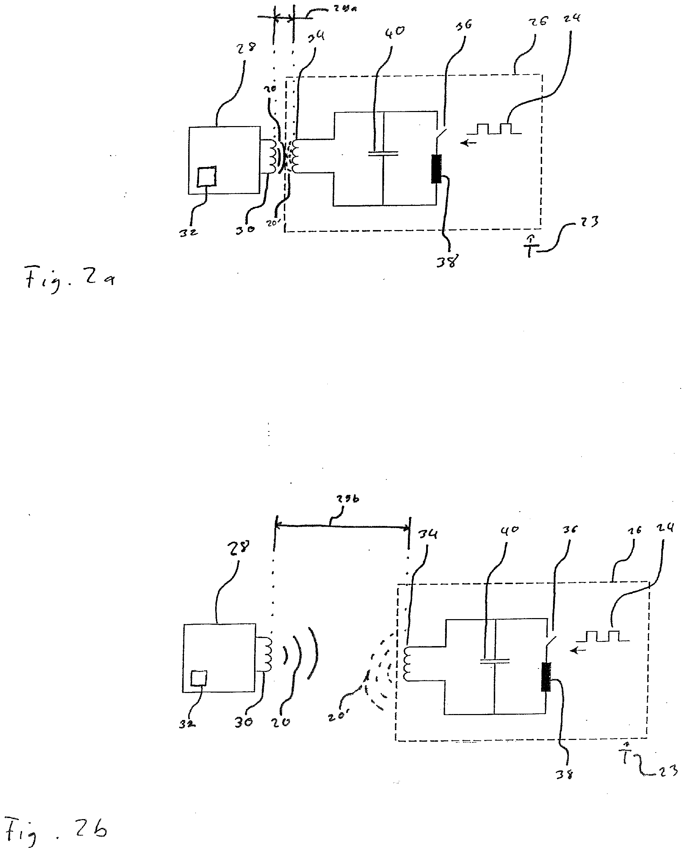

Die Beeinflussung 20' des Sendewechselfelds 20 ist von außen beispielsweise mittels einer Lesevorrichtung (nicht dargestellt) detektierbar, so dass das Sensorwechselsignal 24 bzw. die Frequenz des Sensorwechselsignals 24, welche direkt einen Rückschluss auf die durch die Temperaturmessschaltung 16 ermittelte Umgebungstemperatur 23 zulässt, auslesbar ist. Die Beeinflussung 20' des Sendewechselfelds 20 erfolgt durch Aufmodulieren des Sensorwechselsignals 24 auf das magnetische oder elektromagnetische Sendewechselfeld 20. Im Nahbereich kann die Beeinflussung 20' des magnetischen Sendewechselfelds 20 mittels Lastmodulation durch Veränderung eines Lastwiderstandswerts des Koppelelements 12 erfolgen. Im Fernbereich erfolgt die Beeinflussung 20' des elektromagnetischen Sendewechselfelds 20 mittels modulierter Rückstreuung des Sendewechselfelds 20 durch Veränderung eines Impedanzwerts des Koppelelements 12. Die Beeinflussung 20' des magnetischen oder elektromagnetischen Sendewechselfelds 20 wird im Folgenden Bezug nehmend auf Fig. 2a and 2b näher erläutert.

Fig. 2a zeigt einen passiven Temperatursensor 26 und eine Lesevorrichtung 28, die im Nahfeld miteinander induktiv gekoppelt sind. Die Lesevorrichtung 28 umfasst ein Lese-koppelelement 30, wie z.B. eine Spule, und eine Auswerteeinrichtung 32. Mit einem Abstand 29a ist die Lesevorrichtung 28 gegenüber dem passiven Temperatursensor 26 positioniert. Dieser weist eine Spule 34 als Koppelelement sowie ein Schaltelement 36 auf, das eine erste Seite der Spule 34 über einen Lastwiderstand 38 mit einer zweiten Seite der Spule 34 verbindet bzw. kurzschließt. Des Weiteren ist parallel zu der Spule 34 ein optionaler Kondensator 40 geschaltet.

In diesem Ausführungsbeispiel wird der passive Temperatursensor 26 im Nahbereich bzw. Nahfeld, d.h. in einem Abstand 29a, z.B. zwischen 1 mm und 3 m, betrieben. Das Nahfeld ist dadurch definiert, dass der Abstand zwischen Lese-Koppelelement 30 und Koppelelement bzw. Spule 34 klein (z.B. Abstand 29a < Frequenz/2π) im Vergleich zu der eingesetzten Wellenlänge des magnetischen Sendewechselfelds ist, die beispielsweise im Niederfrequenzbereich zwischen 100 und 135 kHz oder im Hochfrequenzbereich zwischen 6,78 MHz und 27,125 MHz liegt.

Durch Auskopplung des magnetischen Sendewechselfelds 20 mittels des Lese-Koppelelements 30 stellt die Lesevorrichtung 28 dem passiven Temperatursensor 26 Energie zur Verfügung. Diese Energie wird durch die Spule 34 dem magnetischen Sendewechselfeld 20 entnommen und mittels des Energieaufbereitungselements (nicht dargestellt) der Temperaturmessschaltung (nicht dargestellt) bereitgestellt. Diese gibt, wie oben beschrieben, bei (ausreichend) Energieversorgung das von der Umgebungstemperatur 23 abhängige Sensorwechselsignal 24 aus, mittels welchem das Schaltelement 36 so gesteuert wird, dass der Lastwiderstand 38 periodisch in Serie mit der Spule 34 geschaltet wird. Hierdurch erfolgt basierend auf dem Sensorwechselsignal 24 eine Veränderung bzw. periodische Veränderung des Lastwiderstandswerts der Spule 34, so dass eine Lastmodulation des magnetischen Sendewechselfelds 20 mittels der Spule 34 durchgeführt wird. Im Detail bewirkt die Lastmodulation bei Ein- und Ausschalten des Schaltelements 36 eine Spannungsänderung in der Spule 34, wobei die Spannungsänderung mit der Frequenz des Sensorwechselsignals 24 erfolgt. Die Spannungsänderung bzw. Frequenz der Spannungsänderung in der Spule 34 kann durch die Lesevorrichtung 28 detektiert werden. In anderen Worten ausgedrückt, schaltet das Schaltelement 36 eine Last 38 auf die Spule 34 bzw. das Koppelelement, das auch Sekundärspule genannt wird, wodurch der Hilfsträger mit der Frequenz des aktuellen Sensorwechselsignals 24 entsteht, um dasselbe durch Aufmodulieren auf einen Hilfsträger des magnetischen Sendewechselfelds 20 zu übertragen. Somit stellt die direkt auslesbare Frequenz des Sendewechselsignals 24 bzw. des Hilfsträgers selbst die auszuwertende Signalgröße dar, ohne dass eine Digitalisierung oder Codierung des Sensorwerts 24 stattfindet. Der optionale Kondensator 40 ermöglicht, einen Schwingkreis, gebildet durch die Spule 34 und den Kondensator 40, in Resonanz zu betreiben und so die Einkopplung des Sendewechselfelds 20 und die Lastmodulation zu verbessern.

Die Auswerteeinrichtung 32 der Lesevorrichtung 28 ist dazu ausgebildet, um die Umgebungstemperatur 23 des passiven Temperatursensors 26 auf Basis der erfolgten Beeinflussung 20' des Sendewechselfelds 20 bzw. der Lastmodulation zu berechnen. Hierzu wird die erfolgte Beeinflussung 20' des Sendewechselfelds 20 über das Lese-Koppelelement 30 detektiert und durch die Auswerteeinrichtung 32 analysiert. Entsprechend weiteren Ausführungsbeispielen erfolgt die Berechnung durch einen Hüllkurvendemodulator der Auswerteeinrichtung 32, der die Frequenz des Sensorwechselsignals 24 ermittelt. Um von der ermittelten Frequenz des Sensorwechselsignals 24 auf die Umgebungstemperatur 23 zu schließen, kann eine Look-up-Table eingesetzt werden, die Informationen über eine Zuordnung zwischen einer jeweiligen Frequenz des Sensorwechselsignals 24 und der gemessenen Umgebungstemperatur 23 des passiven Temperatursensors 26 umfasst. Eine derartige Look-up-Table kann für den jeweiligen passiven Temperatursensor 26 bei einer Kalibrierung ermittelt werden.

Alternativ kann die Auswerteeinrichtung 32 der Lesevorrichtung 28 ausgebildet sein, um ein auf Basis der erfolgten Beeinflussung 20' des Sendewechselfelds 20 ermitteltes Frequenzsignal in ein Ausgangssignal, wie z.B. ein Spannungssignal, umzuwandeln und dieses bereitzustellen. Die Umwandlung kann mittels einer f/U-Umsetzung (mit f = Frequenz abhängig von dem Sensorwechselsignal 24 und U = Spannung als Ausgangssignal) erfolgen, die beispielsweise auf einer Gleichrichtung und Pufferung des Frequenzsignal basiert.

Bei der f/U-Umsetzung kann eine Skalierung des Ausgangssignals erfolgen, so dass das erhaltenen Ausgangssignal (zumindest bereichsweise) einem Ausgangssignal und einer Kennlinie eines Widerstandstemperatursensors, z.B. eines PTCs (Positive Temperature Coefficient = Kaltleiter, z.B. PT100 bzw. PT1000) oder eines NTCs (Negative Temperature Coefficient = Heißleiter), entspricht. Folglich entspricht der Zusammenhang zwischen dem Ausgangssignal und der ermittelten Umgebungstemperatur 23 zumindest bereichsweise einem Zusammenhang eines genormten Widerstandstemperatursensors. Dies ist vorteilhaft, da die Lesevorrichtung 28 so ein vordefiniertes bzw. genormtes Ausgangssignal ausgibt, welches direkt weiterverarbeitet werden kann, unabhängig davon, mit welchem Temperatursensor die Umgebungstemperatur 23 ermittelt wird.

Fig. 2b zeigt den passiven Temperatursensor 26 und die Lesevorrichtung 28 gemäß Fig. 2a, wobei sich der passive Temperatursensor 26 im Fernbereich bzw. Fernfeld der Lesevorrichtung 28 befindet, d. h., dass ein Abstand 29b, z.B. größer als 3 m oder im Bereich von 2 m bis 5 m, zwischen dem passiven Temperatursensor 26 und der Lesevorrichtung 28 mehrere Wellenlängen der Betriebsfrequenz beträgt. Beim einem Betrieb im Fernfeld (z.B. Abstand 29b > Frequenz/2π) liegt die Frequenz typischerweise in einem Frequenzbereich von 868 MHz und 2,45 GHz.

Im Fernfeld wird die elektrische Energie mittels eines elektromagnetischen Sendewechselfelds 20 bereitgestellt, auf welches, wie im Folgenden näher beschrieben werden wird, auch das Sensorwechselsignal 24 aufmoduliert wird. In diesem Ausführungsbeispiel ist das Schaltelement 36 des passiven Temperatursensors 26 dazu ausgebildet, um basierend auf dem Sensorwechselsignal 24 eine Veränderung bzw. periodische Veränderung des Impedanzwerts der Spule 34 durch Ein- und Ausschalten des Lastwiderstands 38 zu erwirken und so eine Beeinflussung 20' bzw. eine modulierte Rückstreuung des elektromagnetischen Sendewechselfelds 20 mittels der Spule 34 durchzuführen. In anderen Worten ausgedrückt, wird das Sendewechselfeld bei Resonanz mit der Frequenz des Sendewechselsignals 24 durch die Spule 34 (in Kombination mit dem optionalen Kondensator 40) an die Lesevorrichtung 28 zurückgestrahlt (Backscatter-Verfahren). Hierbei ist es vorteilhaft, dass die elektrische Energie und das Sensorwechselsignal 24 über den Abstand 29b, der im Vergleich zu dem Abstand 29a gemäß Fig. 2a größer ist, übertragen werden können.

Bezug nehmend auf Fig. 2a und 2b wird angemerkt, das Koppelelement bzw. das Lese-Koppelelement 30, welche in oben beschriebenen Ausführungsbeispielen als Spulen (vgl. Spule 34) beschrieben sind, alternativ auch als Antenne oder Dipolantenne ausgeführt sein können. Ein Koppelelement, welches als Antenne ausgeführt ist, hat den Vorteil, dass eine gerichtete Kopplung zu der Lesevorrichtung 28 erfolgen kann.

Fig. 3 zeigt eine Multivibratorschaltung 40 mit drei Transistoren 42a, 42b und 42c. Die Transistoren 42a, 42b und 42c sind beispielsweise Feldeffekttransistoren. Feldeffekttransistoren weisen im Allgemeinen ein von der Umgebungstemperatur 23 abhängiges Schaltverhalten auf, wobei dieses je nach eingesetztem Typ unterschiedlich ausgeprägt sein kann. Jeder der drei Transistoren 42a, 42b und 42c ist mit einem Eingangsanschluss bzw. einem Source-Kontakt jeweils über einen Widerstand 44a, 44b und 44c mit dem Energieaufbereitungselement (nicht dargestellt) verbunden. Mit ihren Ausgangsanschluss bzw. Drain-Kontakt sind die drei Transistoren 42a, 42b und 42c jeweils mit einem gemeinsamen Referenzpotenzial 45 des passiven Temperatursensors verbunden. Ein Steuerungsanschluss bzw. Gate-Kontakt des ersten Transistors 42a ist über einen Widerstand 46 mit dem Eingangsanschluss desselben Transistors und einem Steuerungsanschluss des zweiten Transistors 42b gekoppelt. Des Weiteren ist der Steuerungsanschluss des ersten Transistors 42a mit einem Eingangsanschluss des zweiten Transistors 42b und einem Steuerungsanschluss des dritten Transistors 42c über einen Kondensator 48 gekoppelt. In Folge dessen ist der Steuerungsanschluss des dritten Transistors 42c an den Eingangsanschluss des zweiten Transistors 42b gekoppelt und der Steuerungsanschluss des zweiten Transistors 42b an den Eingangsanschluss des ersten Transistors 42a gekoppelt.

Durch diese gegenseitige Kopplung über den Widerstand 46 und den Kondensator 48 ist bei ausreichender Energieversorgung VCC (zwischen den Eingangs- und Ausgansanschlüssen der Transistoren 42a, 42b, 42c) entweder der Transistor 42a oder der Transistor 42b leitend, so dass die Temperaturmessschaltung 40 zwei astabile Zustände aufweist. Durch die Verschaltung des Steuerungsanschlusses des dritten Transistors 42c wird dieser gesperrt, wenn der zweite Transistor 42b gesperrt ist, und leitend, wenn der erste Transistor 42a gesperrt ist. Hierdurch kann an dem Eingangsanschluss des dritten Transistors 42c das Sensorwechselsignal 24, z.B. in Form einer Rechteckspannung bzw. eines Rechtecksignals, ausgegeben werden. Die Dauer der astabilen Zustände der Transistoren 42a und 42b beeinflusst insofern direkt die Frequenz des Sensorwechselsignals 24. Da die Gate-Source-Spannung (z.B. im Bereich von 0,1 V und 4,0 V oder -0,1 V und -4,0 V je nach Transistortyp) zwischen dem Steuerungsanschluss und dem Ausgangsanschluss der zwei Transistoren 42a und 42b von der Umgebungstemperatur 23 abhängig ist, wird durch die Umgebungstemperatur die Dauer der astabilen Zustände und somit die Frequenz des Sensorwechselsignals 24 beeinflusst. Der Zusammenhang äußert sich dadurch, dass bei höheren Umgebungstemperaturen 23 die Transistoren 42a und 42b bei einer geringeren Gate-Source-Spannung, z.B. bei 2,9 V, statt 3,1 V, den Kanal durchschalten, d. h., dass die Durchschaltung des jeweilige Transistors 42a und 42b früher erfolgt. Insofern steigt die Frequenz des Sensorwechselsignals 24 mit steigender Umgebungstemperatur 23.

Alternativ kann die Temperaturmessschaltung 40 entsprechend weiteren Ausführungsbeispielen auch als Kippschaltung oder Oszillatorschaltung oder als eine weitere elektrische Schaltung ausgeführt sein, die ein von der Umgebungstemperatur 23 abhängiges Schaltverhalten aufweist, so dass die Temperaturmessschaltung ein Sensorwechselsignal 24 erzeugt, dessen Frequenz abhängig von der Umgebungstemperatur 23 ist.

Deshalb weist die Temperaturmessschaltung 40 entsprechend weiteren Ausführungsbeispielen mindestens einen oder bevorzugt mindestens zwei Transistoren bzw. Feldeffekttransistoren mit einem von der Umgebungstemperatur 23 abhängigen Schaltverhalten auf, die jeweils mit ihrem Eingangsanschluss bzw. Source-Kontakt über einen Widerstand mit dem Energieaufbereitungselement verbunden sind und die mit dem Ausgangsanschluss bzw. Drain-Kontakt mit einem gemeinsamen Referenzpotenzial verbunden sind. Die Steuerungsanschlüsse bzw. Gate-Kontakte der Transistoren sind jeweils über einen Kondensator an den Eingangsanschluss bzw. Source-Kontakt des anderen Transistors gekoppelt. Hierdurch wird eine Multivibratorschaltung oder allgemein eine bistabile Schaltung mit zwei astabilen Schaltungszuständen gebildet, die ausgebildet ist, ein von der Umgebungstemperatur 23 abhängiges Sensorwechselsignal 24 auszugeben. Auch wenn die oben beschriebene Temperaturmessschaltung 40 im Zusammenhang mit der Verwendung von Feldeffekttransistoren 42a, 42b und 42c beschrieben ist, wird an dieser Stelle angemerkt, dass auch andere Transistortypen, wie z.B. Bipolartransistoren, eingesetzt werden können. Hierbei ist allerdings zu beachten, dass sich die entsprechenden Temperaturbereiche, in denen der Temperatursensor einsetzbar ist, verändern bzw. verschieben.

Es wird ferner angemerkt, dass das Sensorwechselsignal 24 auch an anderen Kontaktpunkten innerhalb der Schaltung 40, z.B. an den Eingangsanschlüssen der Transistoren 42a und 42b oder an den Ausgangsanschlüssen der Transistoren 42a, 42b und 42c, abgreifbar ist.

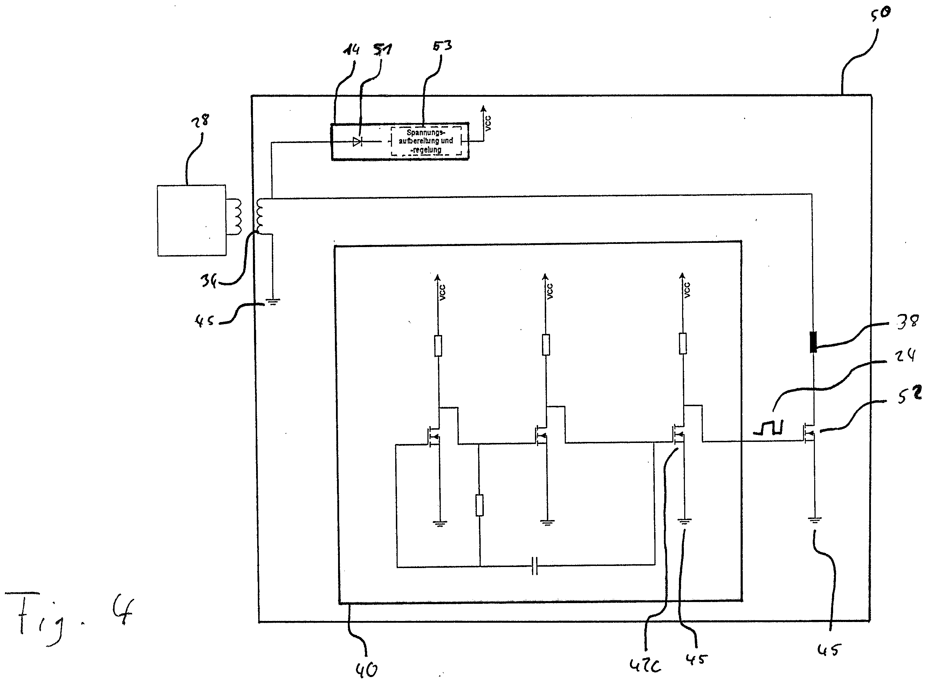

Fig. 4 zeigt einen passiven Temperatursensor 50 und die Lesevorrichtung 28 gemäß Fig. 2a und 2b. Der passive Temperatursensor 50 weist die Spule 34, das Energieaufbereitungselement 14, einen Modulationstransistor 52 als Schaltelement und die Temperaturmessschaltung 40 gemäß Fig. 3 auf. Die Temperaturmessschaltung 40 und die Spule 34 sind auf einer ersten Seite über eine gemeinsame Referenzpotenzial 45 verbunden. Des Weiteren ist die Spule 34 auf einer zweiten Seite mit dem Energieversorgungselement 14 verbunden, welches beispielsweise eine Gleichrichterdiode 51 oder einen Gleichrichter aufweist und ausgebildet ist, der Temperaturmessschaltung 40 elektrische Energie bzw. ein Energieversorgungssignal VCC bereitzustellen. Auf dieser zweiten Seite der Spule 34 ist des Weiteren der Modulationstransistor 52 als Koppelelement über den Lastwiderstand 38 angekoppelt. Die Ankopplung erfolgt über den Eingangsanschluss bzw. Source-Kontakt des Modulationstransistors 52, wobei dieser mit dem Ausgangsanschluss bzw. Drain-Kontakt mit dem gemeinsamen Referenzpotenzial 45 verbunden ist. Über den Steuerungsanschluss bzw. Gate-Kontakt des Modulationstransistors 52 ist dieser mit der Temperaturmessschaltung 40 bzw. genauer mit dem Eingangsanschluss des dritten Transistors 42c verbunden.

Im Folgenden wird die Funktionalität des passiven Temperatursensors 50 diskutiert. Durch die Gleichrichterdiode 51 des Energieaufbereitungselements 14 wird bei Vorhandensein eines magnetischen oder elektromagnetischen Sendewechselfelds die in der Spule 34 induzierte elektrische Energie der Temperaturmessschaltung 40 als Gleichspannung (zwischen den Eingangsanschlüssen und Ausgangsanschlüssen der drei Transistoren 42a, 42b und 42c) zur Verfügung gestellt. Bei ausreichender Energieversorgung VCC (z.B. 5 V) wird durch die Temperaturmessschaltung 40 das Sensorwechselsignal 24 über den Eingangsanschluss des dritten Transistors 42c an den Modulationstransistor 52 ausgegeben, wobei die Funktionalität der Temperaturmessschaltung 40 der gemäß Fig. 3 diskutierten entspricht. Der Modulationstransistor 52 öffnet und schließt auf Basis des Sensorwechselsignals 24 und beeinflusst so durch Zuschalten des Lastwiderstands 38 zu der Spule 34 den Lastwiderstandswert oder den Impedanzwert derselben, so dass eine Beeinflussung des magnetischen oder elektromagnetischen Sendewechselfelds erfolgt. Diese Beeinflussung ist, wie oben erläutert, durch die Lesevorrichtung 28 detektierbar.

Entsprechend weiteren Ausführungsbeispielen kann das Energieaufbereitungselement 14 eine Spannungsaufbereitungsschaltung 53 und/oder Spannungsregelungsschaltung 53 aufweisen, die eine Spannungsglättung bzw. Spannungsregelung ermöglichen.

Es wird angemerkt, dass der passive Temperatursensor 50 sowohl als elektrische Schaltung auf einer Platine als auch als integrierte Schaltung auf einem gemeinsamen Substrat ausgeführt sein kann. Bei der Ausführung mittels Einzelkomponenten in/auf einer Platine besteht der Vorteil, dass die Einzelkomponenten eine geringe Empfindlichkeit aufweisen, so dass eine thermische Zerstörung bei extrem hohen Temperaturen, z.B. über 250° C, verhindert werden kann. Entsprechend einem weiteren Ausführungsbeispiel kann der passive Temperatursensor 50 auch in ein nicht leitfähiges, schwach leitfähige, oder leitfähiges Material, wie z.B. einen Kohlefaserverbund-Werkstoff, eingebettet sein. Bei einer derartigen Einbettung werden für das Sendewechselfeld entsprechend tiefe Frequenzen verwendet. Im Gegensatz dazu besteht bei der Ausführung als integrierte Schaltung der Vorteil, dass diese für die jeweilige Anwendung optimiert sein kann und so beispielsweise der Gesamtenergiebedarf des passiven Temperatursensors 50 im Vergleich zu vorher genannten Ausführungen geringer ist, so dass ein Betrieb des passiven Temperatursensors 50 im Fernfeld (vgl. Fig. 2b) mit großen Abständen 29b zwischen Temperatursensors 50 und Lesevorrichtung 28 möglich ist. Hierbei kann die Spule 34 bzw. das Koppelelement 12 auch direkt als integriertes Bauelement auf einem Chip ausgeführt sein.

Entsprechend weiteren Ausführungsbeispielen kann der Temperatursensor einen Speicher aufweisen, der ausgebildet ist, eine eindeutig zuweisbare Identifikationsnummer zu speichern. Durch die Speicherung und Übertragung der Identifikationsnummer ist es möglich, mit einer Lesevorrichtung mehrere passive Temperatursensoren gleichzeitig zu betreiben und so selektiv die ermittelte Umgebungstemperatur eines eindeutig identifizierbaren Temperatursensors auszulesen, wobei die Identifikationsnummer, analog zu einem RFID-Tag beispielsweise mit auf das Sendewechselfeld aufmoduliert wird.

Im Folgenden werden zusammenfassend die Vorteile des oben beschrieben Temperatursensors erläutert. Bei Ausführungsbeispielen der oben diskutierten Erfindung ist es vorteilhaft, dass die Temperaturmessung mittels des passiven Temperatursensors drahtlos erfolgen kann. Des Weiteren ist hervorzuheben, dass der passive Temperatursensor auf einem sehr einfachen und deshalb störungsunanfälligen Messprinzip basiert, das ohne zusätzliche Komponenten für Analog/Digital-Wandlung oder Hochfrequenzübertragung realisierbar ist. Hierbei wird das ermittelte Messsignal, nämlich die Frequenz des Sensorwechselsignals direkt übertragen und steht der Lesevorrichtung als Messgröße zur Verfügung. Diese Übertragung wird auch durch eine Einbettung in ein nichtleitfähiges, schwach leitfähiges, leitfähiges oder metallisches Material, wie z.B. einen Kohlefaserverbundwerkstoff, nicht oder nur minimal beeinträchtigt. Bei Einsatz eines leitfähigen oder schwach leitfähigen Materials können tiefe Übertragungsfrequenzen eingesetzt werden, um die Übertragungsverluste zu kompensieren. Dies ermöglicht einen flexiblen Einsatz des passiven Temperatursensors, der nahezu an beliebigen Stellen, an denen die Umgebungstemperatur ermittelt werden soll, eingesetzt werden kann. Im Gegensatz zu anderen drahtlosen Temperaturmessverfahren ist keine Sichtverbindung notwendig. Durch den Aufbau des Temperatursensors, der wenige Komponenten umfasst, sind viele verschiedene Formfaktoren denkbar, so dass dieser beispielsweise in Halbleitertechnologien integriert werden kann.

Da der (passive) Sensor von dem Lesegerät über das Hochfrequenzfeld mit Energie versorgt wird, kann auf einen Energiespeicher, wie z.B. eine Batterie, verzichtet werden. Dies ermöglicht, dass der Sensor (unter der Vorraussetzung eines entsprechenden, für die Temperaturen ausgelegten Aufbaus) auch bei Temperaturen eingesetzt werden kann, bei denen herkömmliche Energiespeicher nicht mehr verwendet werden können, z.B. > 150° C oder im Bereich zwischen -40° C und 200° C.

Im Folgenden werden wesentliche Aspekte der oben beschriebenen Ausführungsbeispiele, die eine drahtlose Messung der Umgebungstemperatur (23) ermöglichen, noch mal zusammengefasst dargestellt. Der Temperatursensor (10, 26) ist passiv, wobei die Energieversorgung drahtlos über ein induktiv angekoppeltes Feld (20), das von einem Lesegerät (28) erzeugt wird, erfolgt. Die Temperaturmessung erfolgt über das Schaltverhalten von Feldeffekttransistoren (42a, 42b, 42c), die so verschaltet sind, dass sie beispielsweise ein Rechtecksignal (24) erzeugen. Bei Temperaturänderungen ändert sich das Verhalten der Feldeffekttransistoren (42a, 42b, 42c), wobei sich folglich die Frequenz des erzeugten Rechtecksignals (24) mit der Temperatur (23) ändert. Dieses temperaturabhängige Signal (24) wird mittels Lastmodulation (induktiv) von dem Sensor (10, 26) an das Lesegerät (28) übertragen. Hierbei wird der aktuelle Sensorwert (24) auf das Feld (20) als Hilfsträger aufmoduliert. Dabei findet keine Digitalisierung und Codierung des Sensorwerts (24) statt, sondern die Frequenz des Hilfsträgers selbst ist die auszuwertende Sensorgröße. An dem Lesegerät (28) kann der Hilfsträger beispielsweise durch eine einfache Hüllkurvendemodulation zurückgewonnen werden und dann dessen Frequenz als Messwert entsprechend ausgewertet werden.

Die Hilfsträgerfrequenz wird mit mehreren Feldeffekttransistoren (42a, 42b, 42c) durch eine geeignete Schaltung (16, 40), z.B. eine Multivibratorschaltung, erzeugt und mit einem weiteren Feldeffekttransistor (52) und einer Lastimpedanz (38) auf die induktive Übertragungsstrecke aufmoduliert. Im Detail heißt das, dass das Ausgangssignal (24), z.B. ein Rechtecksignal mit temperaturabhängiger Frequenz, dazu benutzt wird, um den weiteren Feldeffekttransistor (52) anzusteuern. Dieser schaltet eine Last (38) auf die Sekundärspule (34) der induktiven Übertragungsstrecke, wodurch der Hilfsträger mit der Frequenz der erzeugten Rechteckspannung entsteht. Dadurch wird die temperaturabhängige Frequenz vom Sensor direkt an das Lesegerät (28) übertragen, ohne dass eine vorherige Umwandlung des Sensorwerts für die Übertragung stattfinden muss. An dieser Stelle wird angemerkt, dass andere Wege zur Erzeugung des Frequenzsignals (24) auch denkbar sind. Wichtig hierbei ist, dass die Frequenz des erzeugten Signals (24) von der Umgebungstemperatur (23) beeinflusst wird. Frequenzbestimmend ist hier das temperaturabhängige Schaltverhalten der Feldeffekttransistoren (42a, 42b, 42c). Bei höheren Temperaturen schalten diese Transistoren (42a, 42b, 42c) früher, d.h. es genügen geringere Gate-Source-Spannungen, um den Kanal durchzuschalten. Die Ausgangsfrequenz der gezeigten Schaltung (16, 40) steigt mit steigender Temperatur (23). Die Energieversorgung dieser Schaltung wird aus dem von dem Lesegerät (28) generierten HF-Feld (20) durch entsprechende Gleichrichtung (51) und Regelung (53) eines Energieversorgungselements (14) sichergestellt.

## Patentansprüche

1. Passiver Temperatursensor (10, 26, 50) mit leitungsungebundener Messsignalübertragung, mit folgenden Merkmalen:
einem Koppelelement (12, 34), das ausgebildet ist, um einem magnetischen oder elektromagnetischen Sendewechselfeld (20) elektrische Energie zu entnehmen,
einem Energieaufbereitungselement (14), das ausgebildet ist, um basierend auf der entnommenen elektrischen Energie ein Energieversorgungssignal bereitzustellen,
einer Temperaturmessschaltung (16, 40), die ausgebildet ist, um bei Versorgung mit dem Energieversorgungssignal ein Sensorwechselsignal (24), dessen Frequenz abhängig von einer Umgebungstemperatur (23) ist, zu erzeugen, wobei die Temperaturmessschaltung (16) eine Multivibratorschaltung (40) umfasst, welche einen oder mehrere Transistoren (42a, 42b, 42c) mit einem von der Umgebungstemperatur (23) abhängigen Schaltverhalten aufweist, sodass sich die Frequenz des erzeugten Sensorwechselsignals in Abhängigkeit von einer Änderung der Umgebungstemperatur ändert, und
einem Schaltelement (18, 36, 52), das ausgebildet ist, um basierend auf dem Sensorwechselsignal (24) eine dem Koppelelement (12, 34) zugeordnete, physikalische Eigenschaft zu verändern, um basierend auf dem Sensorwechselsignal (24) eine Beeinflussung (20') des Sendewechselfelds (20) zu erhalten.

2. Passiver Temperatursensor (10, 26, 50) gemäß Anspruch 1, wobei die physikalische Eigenschaft ein Lastwiderstandswert oder ein Impedanzwert des Koppelelements (12, 34) ist.

3. Passiver Temperatursensor (10, 26, 50) gemäß Anspruch 1 oder 2, bei dem das Schaltelement (18, 36, 52) ausgebildet ist, um basierend auf dem Sensorwechselsignal (24) durch Veränderung des Lastwiderstandswerts eine Lastmodulation des magnetischen Sendewechselfelds (20) mittels des Koppelelements (12, 34) durchzuführen.

4. Passiver Temperatursensor (10, 26, 50) gemäß Anspruch 1 oder 2, bei dem das Schaltelement (18, 36, 52) ausgebildet ist, um basierend auf dem Sensorwechselsignal (24) durch Veränderung des Impedanzwerts eine modulierte Rückstreuung des elektromagnetischen Sendewechselfelds (20) mittels des Koppelelements (12, 34) durchzuführen.

5. Passiver Temperatursensor (10, 26, 50) gemäß einem der Ansprüche 2 bis 4, bei dem das Schaltelement (18, 36) einen Modulationstransistor (52) aufweist, der mit seinem Eingangsanschluss mit einer ersten Seite des Koppelelements (12, 34) verbunden ist und mit seinem Ausgangsanschluss mit einer zweiten Seite des Koppelelements (12, 34) verbunden ist,
wobei der Modulationstransistor (52) ausgebildet ist, um den Lastwiderstandswert des Koppelelements (12, 34) periodisch entsprechend der Frequenz des Sensorwechselsignals (24) zu verändern, welches an einem Steuerungsanschluss des Modulationstransistors (52) anliegt.

6. Passiver Temperatursensor (10, 26, 50) gemäß einem der vorherigen Ansprüche, bei dem das Koppelelement (12) eine Spule (34) zur induktiven Kopplung oder eine Antenne aufweist.

7. Passiver Temperatursensor (10, 26, 50) gemäß einem der vorherigen Ansprüche, bei dem das Schaltelement (18, 36, 52) ausgebildet ist, um das Sendewechselfeld (20) durch Aufmodulieren des Sensorwechselsignals (24) mittels des Koppelelements (12, 34) zu beeinflussen.

8. Passiver Temperatursensor (10, 26, 50) gemäß einem der vorherigen Ansprüche, wobei die Temperaturmessschaltung (16, 40) mindestens zwei Transistoren (42a, 42b, 42c) umfasst, die jeweils mit einem Eingangsanschluss über einen Widerstand (44a, 44b, 44c) mit dem Energieaufbereitungselement (14) verbunden sind und die mit einem Ausgangsanschluss mit einem gemeinsamen Referenzpotential (45) verbunden sind, und
wobei mindestens ein Steuerungsanschluss eines der mindestens zwei Transistoren (42a, 42b, 42c) über einen Kondensator (48) an den Eingangsanschluss des anderen der mindestens zwei Transistoren (42a, 42b, 42c) gekoppelt ist.

9. Passiver Temperatursensor (10, 26, 50) gemäß Anspruch 8, wobei die Temperaturmessschaltung (16, 40) einen dritten Transistor (42c) aufweist,
wobei ein Steuerungsanschluss des ersten Transistors (42a) über einen Widerstand (46) an einen Eingangsanschluss des ersten Transistors (42a) gekoppelt ist, ein Steuerungsanschluss des zweiten Transistors (42b) an den Eingangsanschluss des ersten Transistors (42a) gekoppelt ist und ein Steuerungsanschluss des dritten Transistors (42c) an den Eingangsanschluss des zweiten Transistors (42b) gekoppelt ist; und
wobei der Eingangsanschluss des dritten Transistors (42c) ferner dazu ausgebildet ist, um das Sensorwechselsignal (24) dem Koppelelement (12, 34) zuzuführen.

10. Passiver Temperatursensor (10, 26, 50) gemäß einem der vorherigen Ansprüche, wobei das Energieaufbereitungselement (14) eine Gleichrichterdiode (51) oder einen Gleichrichter umfasst, und wobei das Koppelelement (12, 34) und die Temperaturmessschaltung (16, 40) ein gemeinsames Referenzpotential (45) aufweisen.

11. Lesevorrichtung (28) zur passiven Temperaturmessung mit folgenden Merkmalen:
einem Lese-Koppelelement (30), das ausgebildet ist, um ein magnetisches oder elektromagnetisches Sendewechselfeld (20) bereitzustellen, und um eine durch einen passiven Temperatursensor (10, 26, 50) gemäß einem der Ansprüche 1 bis 10 erfolgte Beeinflussung (20') des Sendewechselfelds (20) zu erfassen; und
einer Auswerteeinrichtung (32), die ausgebildet ist, um eine Temperaturinformation über die Umgebungstemperatur (23) des passiven Temperatursensors (10, 26, 50) auf Basis der erfolgten Beeinflussung (20') des Sendewechselfelds (20) zu ermitteln, oder um auf Basis der erfolgten Beeinflussung (20') des Sendewechselfelds (20) ein Ausgangssignal auszugeben, von dem die Temperaturinformation über die Umgebungstemperatur (23) des passiven Temperatursensors (10, 26, 50) ableitbar ist.

12. Lesevorrichtung (28) gemäß Anspruch 11, wobei die Auswerteeinrichtung (32) einen Hüllkurvendemodulator aufweist, der ausgebildet ist, um auf Basis der erfassten Beeinflussung (20') des Sendewechselfelds (20) die Frequenz eines Sensorwechselsignals (24), welches mittels einer Lastmodulation oder mittels modulierter Rückstreuung auf das magnetische oder elektromagnetische Sendewechselfeld (20) aufmoduliert ist, zu ermitteln.

13. Lesevorrichtung (28) gemäß Anspruch 11 oder 12, wobei das Ausgangssignals einen Zusammenhang zwischen Umgebungstemperatur (23) und dem Ausgangssignal aufweist, der zumindest bereichsweise einem vordefinierten Zusammenhang eines Widerstandssensors entspricht.

14. Lesevorrichtung (28) gemäß Anspruch 11 oder 12, wobei die Auswerteeinrichtung (32) ferner ausgebildet ist, die Temperätwinformation mittels einer Look-up-Tabelle zu ermitteln,
wobei die Look-up-Tabelle Informationen über eine Zuordnung zwischen der Frequenz des Sensorwechselsignals (24) und der gemessenen Umgebungstemperatur (23) des passiven Temperatursensors (10, 26, 50) für den jeweiligen passiven Temperatursensor (10, 26, 50) aufweist.

## Claims

1. A passive temperature sensor (10, 26, 50) with cordless measurement signal transmission, comprising:
a coupling element (12, 34) that is implemented to draw electric energy from a magnetic or electromagnetic transmission alternating field (20),
an energy rendering element (14) that is implemented to provide an energy supply signal based on the drawn electric energy,
a temperature measurement circuit (16, 40) that is implemented to generate, when supplied with the energy supply signal, a sensor alternating signal (24) whose frequency depends on an environmental temperature (23), wherein the temperature measurement circuit (16) comprises a multi vibrator circuit (40) comprising one or several transistors (42a, 42b, 42c) having a switching behavior depending on the environmental temperature (23) so that the frequency of the sensor alternating signal generated changed depending on a change in the environmental temperature, and
a switching element (18, 36, 52) that is implemented to change, based on the sensor alternating signal (24), a physical characteristic allocated to the coupling element (12, 34) to obtain an impact (20') on the transmission alternating field (20) based on the sensor alternating signal (24).

2. The passive temperature sensor (10, 26, 50) according to claim 1, wherein the physical characteristic is a load resistance or impedance value of the coupling element (12, 34).

3. The passive temperature sensor (10, 26, 50) according to claim 1 or 2, wherein the switching element (18, 36, 52) is implemented to perform, based on the sensor alternating signal (24) and by changing the load resistance, load modulation of the magnetic transmission alternating field (20) by means of the coupling element (12, 34).

4. The passive temperature sensor (10, 26, 50) according to claim 1 or 2, wherein the switching element (18, 36, 52) is implemented to perform, based on the sensor alternating signal (24) and by changing the impedance value, modulated backscattering of the electromagnetic transmission alternating field (20) by means of the coupling element (12, 34).

5. The passive temperature sensor (10, 26, 50) according to any of claims 2 to 4, wherein the switching element (18, 36) comprises a modulation transistor (52) that is connected to a first side of the coupling element (12, 34) by its input terminal and connected to a second side of the coupling element (12, 34) by its output terminal,
wherein the modulation transistor (52) is implemented to periodically change the load resistance of the coupling element (12, 34) corresponding to the frequency of the sensor alternating signal (24) that is applied to a control terminal of the modulation transistor (52).

6. The passive temperature sensor (10, 26, 50) according to any of the previous claims, wherein the coupling element (12) comprises a coil (34) for inductive coupling or an antenna.

7. The passive temperature sensor (10, 26, 50) according to any of the previous claims, wherein the switching element (18, 36, 52) is implemented to influence the transmission alternating field (20) by modulating the sensor alternating signal (24) by means of the coupling element (12, 34).

8. The passive temperature sensor (10, 26, 50) according to any of the previous claims, wherein the temperature measurement circuit (16, 40) comprises at least two transistors (42a, 42b, 42c), each connected, via a resistor (44a, 44b, 44c), to the energy rendering element (14) by an input terminal and connected to a common reference potential (45) by an output terminal, and
wherein at least one control terminal of one of the at least two transistors (42a, 42b, 42c) is coupled to the input terminal of the other of the at least two transistors (42a, 42b, 42c) via a capacitor (48).

9. The passive temperature sensor (10, 26, 50) according to claim 8, wherein the temperature measurement circuit (16, 40) comprises a third transistor (42c),
wherein a control terminal of the first transistor (42a) is coupled to an input terminal of the first transistor (42a) via a resistor (46), a control terminal of the second transistor (42b) is coupled to the input terminal of the first transistor (42a) and a control terminal of the third transistor (42c) is coupled to the input terminal of the second transistor (42b); and
wherein the input terminal of the third transistor (42c) is further implemented to supply the sensor alternating signal (24) to the coupling element (12, 34).

10. The passive temperature sensor (10, 26, 50) according to any of the previous claims, wherein the energy rendering element (14) comprises a rectifier diode (51) or a rectifier, and wherein the coupling element (12, 34) and the temperature measurement circuit (16, 40) comprise a common reference potential (45).

11. A reading device (28) for passive temperature measurement, comprising:
a read-coupling element (30) that is implemented to provide a magnetic or electromagnetic transmission alternating field (20) to detect an impact (20') on the transmission alternating field (20) effected by a passive temperature sensor (10, 26, 50) according to any of claims 1 to 10; and
evaluation means (32) that is implemented to determine temperature information on the environmental temperature (23) of the passive temperature sensor (10, 26, 50) based on the effected impact (20') on the transmission alternating field (20) or to output an output signal based on the effected impact (20') on the transmission alternating field (20) from which the temperature information on the environmental temperature (23) of the passive temperature sensor (10, 26, 50) can be derived.

12. The reading device (28) according to claim 11, wherein the evaluation means (32) comprises an envelope modulator that is implemented to determine, based on the detected impact (20') on the transmission alternating field (20), the frequency of a sensor alternating signal (24) which is modulated onto the magnetic or electromagnetic transmission alternating field (20) by means of load modulation or by means of modulated backscattering.

13. The reading device (28) according to claim 11 or 12, wherein the output signal comprises a connection between environmental temperature (23) and output signal corresponding at least section-wise to a predefined connection of a resistance sensor.

14. The reading device (28) according to claim 11 or 12, wherein the evaluation means (32) is further implemented to determine the temperature information by means of a look-up table,
wherein the look-up table comprises information on an allocation between the frequency of the sensor alternating signal (24) and the measured environmental temperature (23) of the passive temperature sensor (10, 26, 50) for the respective passive temperature sensor (10, 26, 50).

## Revendications

1. Capteur de température passif (10, 26, 50) à transmission de signal de mesure sans connexion par câble, aux caractéristiques suivantes:
un élément de couplage (12, 34) qui est conçu pour prélever de l'énergie électrique d'un champ alternatif de transmission magnétique ou électromagnétique (20),
un élément de traitement d'énergie (14) qui est conçu pour mettre à disposition, sur base de l'énergie électrique prélevée, un signal d'alimentation d'énergie,
un circuit de mesure de température (16, 40) qui est conçu pour générer, lors de l'alimentation avec le signal d'alimentation d'énergie, un signal alternatif de capteur (24) dont la fréquence dépend d'une température ambiante (23), le circuit de mesure de température (16) comportant un circuit multivibrateur (40) qui présente un ou plusieurs transistors (42a, 42b, 42c) à comportement de commutation qui dépend de la température ambiante (23), de sorte que la fréquence du signal alternatif de capteur généré varie en fonction d'une variation de la température ambiante, et
un élément de commutation (18, 36, 52) qui est conçu pour modifier, sur base du signal alternatif de capteur (24), une propriété physique associée à l'élément de couplage (12, 34), pour déterminer, sur base du signal alternatif de capteur (24), une influence (20') sur le champ alternatif de transmission (20).

2. Capteur de température passif (10, 26, 50) selon la revendication 1, dans lequel ladite propriété physique est une valeur de résistance de charge ou une valeur d'impédance de l'élément de couplage (12, 34).

3. Capteur de température passif (10, 26, 50) selon la revendication 1 ou 2, dans lequel l'élément de commutation (18, 36, 52) est conçu pour réaliser, sur base du signal alternatif de capteur (24) par modification de la valeur de résistance de charge, une modulation de charge du champ alternatif de transmission magnétique (20) au moyen de l'élément de couplage (12, 34).

4. Capteur de température passif (10, 26, 50) selon la revendication 1 ou 2, dans lequel l'élément de commutation (18, 36, 52) est conçu pour réaliser, sur base du signal alternatif de capteur (24) par modification de la valeur d'impédance, une rétrodiffusion modulée du champ alternatif de transmission électromagnétique (20) au moyen de l'élément d'accouplement (12, 34).

5. Capteur de température passif (10, 26, 50) selon l'une des revendications 2 à 4, dans lequel l'élément de commutation (18, 36) présente un transistor de modulation (52) qui est connecté, par sa borne d'entrée, à un premier côté de l'élément de couplage (12, 34) et qui est connecté, par sa borne de sortie, à un deuxième côté de l'élément de couplage (12, 34),
dans lequel le transistor de modulation (52) est conçu pour modifier périodiquement la valeur de résistance de charge de l'élément de couplage (12, 34) en fonction de la fréquence du signal alternatif de capteur (24) qui est présent à une borne de commande du transistor de modulation (52).

6. Capteur de température passif (10, 26, 50) selon l'une des revendications précédentes, dans lequel l'élément de couplage (12) présente une bobine (34) pour le couplage inductif ou une antenne.

7. Capteur de température passif (10, 26, 50) selon l'une des revendications précédentes, dans lequel l'élément de commutation (18, 36, 52) est conçu pour influencer le champ alternatif de transmission (20) par modulation du signal alternatif de capteur (24) au moyen de l'élément de couplage (12, 34).

8. Capteur de température passif (10, 26, 50) selon l'une des revendications précédentes, dans lequel le circuit de mesure de température (16, 40) comporte au moins deux transistors (42a, 42b, 42c) qui sont connectés, chacun, par une borne d'entrée, par l'intermédiaire d'une résistance (44a, 44b, 44c) à l'élément de traitement d'énergie (14) et qui sont connectés, par une borne de sortie, à un potentiel de référence commun (45), et
dans lequel au moins une borne de commande de l'un des au moins deux transistors (42a, 42b, 42c) est couplée, par l'intermédiaire d'un condensateur (48), à la borne d'entrée de l'autre des au moins deux transistors (42a, 42b, 42c).

9. Capteur de température passif (10, 26, 50) selon la revendication 8, dans lequel le circuit de mesure de température (16, 40) présente un troisième transistor (42c),
dans lequel une borne de commande du premier transistor (42a) est couplée, par l'intermédiaire d'une résistance (46), à une borne d'entrée du premier transistor (42a), une borne de commande du deuxième transistor (42b) est couplée à la borne d'entrée du premier transistor (42a) et une borne de commande du troisième transistor (42c) est couplée à la borne d'entrée du deuxième transistor (42b); et
dans lequel la borne d'entrée du troisième transistor (42c) est par ailleurs conçue pour alimenter le signal alternatif de capteur (24) vers l'élément de couplage (12, 34).

10. Capteur de température passif (10, 26, 50) selon l'une des revendications précédentes, dans lequel l'élément de traitement d'énergie (14) comporte une diode de redressement (51) ou un redresseur, et dans lequel l'élément de couplage (12, 34) et le circuit de mesure de température (16, 40) présentent un potentiel de référence commun (45).

11. Dispositif de lecture (28) pour la mesure passive de la température, aux caractéristiques suivantes:
un élément de couplage de lecture (30) qui est conçu pour mettre à disposition un champ alternatif de transmission magnétique ou électromagnétique (20) et pour détecter, une influence (20') exercée sur le champ alternatif de capteur (20) par un capteur de température passif (10, 26, 50) selon l'une des revendications 1 à 10; et
un moyen d'évaluation (32) qui est conçu pour déterminer une information de température sur la température ambiante (23) du capteur de température passif (10, 26, 50) sur base de l'influence (20') exercée sur le champ alternatif de transmission (20), ou pour sortir, sur base de l'influence (20') exercée sur le champ alternatif de transmission (20), un signal de sortie duquel peut être dérivée l'information de température sur la température ambiante (23) du capteur de température passif (10, 26, 50).

12. Dispositif de lecture (28) selon la revendication 11, dans lequel le moyen d'évaluation (32) présente un démodulateur d'enveloppe qui est conçu pour déterminer, sur base de l'influence détectée (20') sur le champ alternatif de transmission (20), la fréquence d'un signal alternatif de capteur (24) qui est modulée au moyen d'une modulation de charge ou au moyen d'une rétrodiffusion modulée sur le champ alternatif de transmission magnétique ou électromagnétique (20).

13. Dispositif de lecture (28) selon la revendication. 11 ou 12, dans lequel le signal de sortie présente un rapport entre la température ambiante (23) et le signal de sortie qui correspond au moins par endroits à un rapport prédéterminé d'un capteur de résistance.

14. Dispositif de lecture (28) selon la revendication 11 ou 12, dans lequel le moyen d'évaluation (32) est par ailleurs conçu pour déterminer l'information de température au moyen d'un tableau de consultation,
dans lequel le tableau de consultation présente des informations sur une association entre la fréquence du signal alternatif de capteur (24) et la température ambiante mesurée (23) du capteur de température passif (10, 26, 50) pour le capteur de température passif respectif (10, 26, 50).
